# EUROPEAN PATENT SPECIFICATION

(11) **EP 3 353 009 B1**
(45) Date of publication and mention of the grant of the patent: **24.07.2019**
(21) Application number: 16778435.4
(22) Date of filing: 23.09.2016
(51) Int. Cl.: B60L 15/40, B65F 3/00

(54) **REVERSING SAFETY SYSTEM**
UMKEHRSICHERHEITSSYSTEM
SYSTÈME DE SÉCURITÉ DE RETOURNEMENT

(30) Priority: 24.09.2015 GB 201516928; 09.09.2016 GB 201615362
(43) Date of publication of application: 01.08.2018
(73) Proprietor: Innovative Safety Systems Limited, Coventry, West Midlands CV3 2RL (GB)
(72) Inventor: THODAY, Gavin Robert, Coventry West Midlands CV3 2RL (GB)
(74) Representative: Range, Christopher William
(86) International application number: PCT/GB2016/052962
(87) International publication number: WO 2017/051184

(56) References cited:
- EP-A1- 2 610 777
- DE-A1- 19 902 512

## Description

The present invention relates to a vehicle reversing safety system for use with large vehicles, and a method for operating a vehicle reversing safety system.

Large vehicles, such as refuse vehicles, and those used on building sites and quarries routinely operate with a driver and a banksman. When it is necessary to reverse or manoeuvre the vehicle at low speeds, the banksman exits the vehicle and stands in an appropriate position to monitor the area surrounding the vehicle, including any blind spots the vehicle may have and any potential hazards. When the manoeuvre is complete, the banksman returns to the vehicle. The banksman may also be referred to as a reversing assistant.

Such a process provides a hazard-reducing manner of operating a vehicle.

However, drivers and banksmen operating under time pressure, or other circumstances, may be tempted to omit this process. A confident driver may assume a banksman is not required for example. This is undesirable and could lead to a hazardous situation arising.

The present invention aim to address one or more of the above problems.

Document DE 199 02 512 A1 discloses a reversing safety system for a vehicle, the reversing safety system comprising: a receiver arranged to be fitted to a vehicle; a safety control unit arranged to be fitted to a vehicle; and a portable unit including a transmitter, the transmitter adapted to transmit a transmitted signal; wherein the receiver is configured to sense when the portable unit is in a target area relative to the receiver, wherein the receiver senses when the portable unit is in a target area by receiving the transmitted signal as a received signal, and wherein the transmitter has a switch which must be continuously operated for a continuous signal to be transmitted.

Document DE 199 02 512 A1 discloses a method of safely reversing a vehicle comprising the steps of: providing a vehicle with a banksman and a reversing safety system, the reversing safety system comprising: a receiver and a portable unit including a transmitter, the transmitter adapted to transmit a transmitted signal; wherein the receiver is arranged to be fitted to a vehicle, and wherein the receiver is configured to sense when the portable unit is in a target area relative to the receiver, before commencing the reversing manoeuvre, the banksman exits the vehicle with the portable unit,the banksman uses the portable unit to transmit the transmitted signal; wherein the receiver is configured to receive the transmitted signal as a received signal when portable unit is in the target area and wherein the receiver is configured not to receive the transmitted signal as a received signal when the portable unit is not in the target area, wherein the reversing safety system further comprises a safety control unit, wherein the safety control unit is arranged to be fitted to a vehicle, wherein the transmitter has a switch which must be continuously operated by the banksman for a continuous signal to be transmitted.

According to the first aspect of the present invention there is provided a reversing safety system for a vehicle having the features of claim 1.

The use of the reversing safety system ensures that the banksman (reversing assistant) stands in the target area when the vehicle is reversed. The target area is a first, appropriate position relative to the receiver. Outside of the target area is a second, inappropriate position relative to the receiver. The portable unit is carried by the banksman, who stands behind and to one side of the rear of the vehicle. The banksman is there to ensure safe reversing of the vehicle.

The hand held device is held by the banksman, who stands behind and to one side of the rear of the vehicle. A transmitter and receiver identifies the position of the banksman relative to the vehicle. The banksman is there to ensure safe reversing of the vehicle. Reversing of the vehicle may only take place when the hand held device is in the correct position relative to the vehicle.

The receiver senses when the portable unit is in a target area by receiving the transmitted signal as a received signal. Thus the reversing safety system identifies the position of the banksman relative to the vehicle.

The receiver includes a restrictor guide, so that the transmitted signal from the portable unit is not received unless the portable unit is in the target area. The receiver may use a directional antennae, so that the transmitted signal from the portable unit is not received unless the portable unit is in the target area.

The reversing safety system further comprises a safety control unit, arranged to be fitted to a vehicle.

The receiver is configured to relay the received signal by connection means to the safety control unit, the received signal being relayed to the safety control unit as a relayed signal.

The connection means may be electrical wiring. The electrical wiring may be routed through pre-existing wiring ducts already provided on the vehicle. For example, when the receiver is located at the rear of the vehicle and the safety control unit is arranged on the dash board of the vehicle cab, pre-existing wiring ducts are already provided in the vehicle to connect the rear lighting system to the lighting control unit provided in the dash board.

The safety control unit is arranged to operate on receipt of the relayed signal.

The safety control unit is arranged to operate by at least one of: disabling an alarm system, disengaging a vehicle brake, disabling an inhibit of selection of the reverse gear, disabling a vehicle reverse speed limiter. Disablement of an alarm indicates to the driver that the reversing manoeuvre may be safely commenced. Disablement of a brake and/or the inhibit of the selection of the reverse gear allows the driver to commence the reversing manoeuvre. Disablement of a vehicle reverse speed limiter allows the driver to complete the reversing manoeuvre at a time-efficient, but safe, speed.

The alarm system is an audible or visible alarm. The alarm system is provided in a cab of a vehicle.

The transmitter may be a radio transmitter. The radio transmitter operates in a frequency band.

The radio transmitter may operate in multiple frequency bands. The portable unit and the receiver may be run through an initial pairing sequence to ensure that the portable unit and receiver are operating on the same wavelength. A second or further reversing safety system operated in the vicinity would therefore not interfere with the first reversing safety system.

Communication means may be provided on the portable unit and safety control unit. The communication means may be a two way radio. This allows the driver and banksman to be in communication during the manoeuvre.

The transmitter has a switch which must be continuously operated for a continuous signal to be transmitted, and the safety control unit is arranged to cease operation as soon as a signal is not received at the sensor. The transmitter switch has a timeout.

The portable unit may include a brake override, and/or a reference vehicle bin lift override and/or a packer plate override. This allows the banksman to override operation of the brake, (or release thereof), the bin lift and/or the packer plate should the banksmen observe that it is not safe to operate the refuse vehicle in that way. The portable unit may be a hand held device.

According to a second aspect of the present invention there is provided a method of safely reversing a vehicle having the features of claim 10.

The safety control unit may identify selection of the reverse gear by interrogating the reverse lighting circuit.

Alternatively, or additionally, the safety control unit may identify attempted selection or selection of the reverse gear by interrogation of the gearbox output signal.

The alarm state may be an audible or visible alarm. The audible or visible alarm may be provided in the vehicle cab.

Alternatively, or additionally, the alarm state may be a vehicle brake. This prevents commencement of the reversing manoeuvre until the portable unit is in the target area and the banksman has indicated that it is safe to do so.

Alternatively, or additionally, the alarm state may be a vehicle reverse speed limiter. A vehicle reverse speed limiter prevents performance of a reversing manoeuvre at a reversing speed greater than a crawl, such as 1 to 2 kmph.

The transmitter has a switch which must be continuously operated by the banksman for a continuous signal to be transmitted, and the safety control unit is arranged to re-enter the alarm state as soon as a signal is not received at the receiver.

This ensures that any change in situation regarding the safety of the reversing manoeuvre is constantly monitored by the banksman.

An embodiment of the invention will now be described, by way of example only, with reference to the accompanying figures, in which:
Figure 1 is a schematic view of the vehicle reversing safety system of the present invention;
Figure 2 is a schematic plan view of the receiver;
Figure 3 is a perspective view of the hand-held device;
Figure 4 is a flowchart illustrating operation of the vehicle reversing system according to a first embodiment of the present invention;
Figure 5 is a flowchart illustrating operation of the vehicle reversing system according to a second embodiment of the present invention; and
Figure 6 is a perspective view of an alternate hand-held device in accordance with the present invention.

### Vehicle reversing system

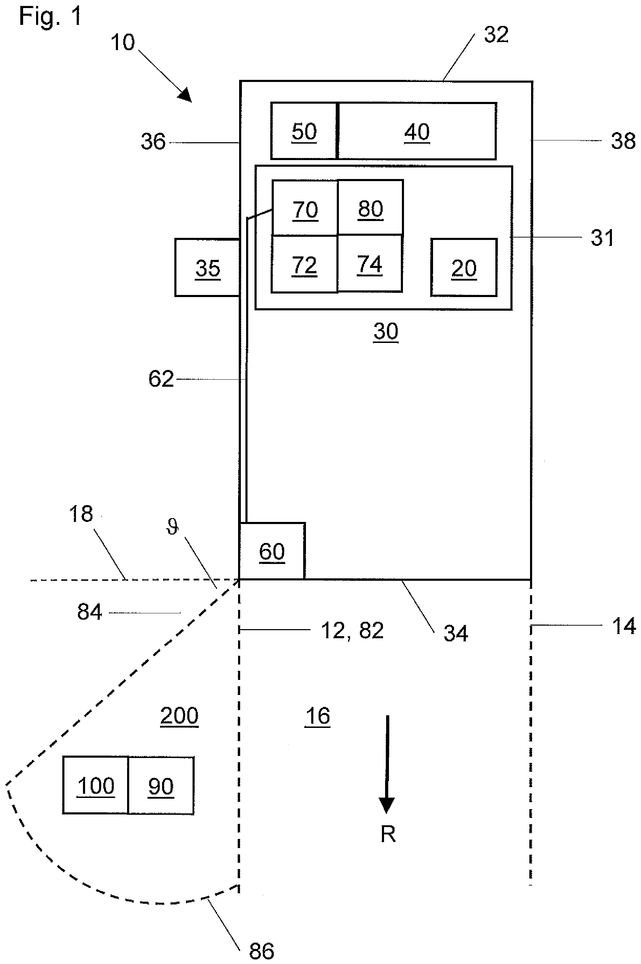

With reference to the Figure 1, the vehicle reversing safety system 10 comprises a large vehicle, in this case a refuse vehicle 30 and a handheld device 100.

The refuse vehicle 30 has and an engine 40 an engine control unit (ECU) 50 as is known. The refuse vehicle 30 has a driver 20 and a driver's cab 31. The driver 20 controls the refuse vehicle 30 from the driver's cab 31. Also in the driver's cab 31 is a safety control unit (SCU) 70. The SCU 70 further includes docking unit 80 as will be explained in more detail below. The SCU 70 further includes an audible and visible alarm. The audible alarm is a speaker 72. The visible alarm is a red led light 74.

The refuse vehicle 30 has a front 32 and a rear 34. The refuse vehicle has a curbside 36 and a roadside 38. On the curbside 36 of the refuse vehicle 30, a wing mirror 35 provides the driver 20 with a view of the curbside rear of the refuse vehicle 30.

At the curbside rear corner of the refuse vehicle 30 is a receiver 60. Typically the receiver 60 is mounted high-up on the vehicle, and pitched slightly downwards. A further or alternate receiver 60 may be mounted on the roadside 38 rear corner of the vehicle 30 (not shown).

Away from the refuse vehicle 30, a banksman 90 stands with the hand-held device 100.

### Manoeuvring space

The refuse vehicle 30 performs a reversing manoeuvre by advancing in the direction of arrow "R". In doing so, the refuse vehicle 30 curbside 36 traces a line 12 and the refuse vehicle 30 roadside 38 traces a line 14. In the embodiments shown these lines 12, 14 are straight, for simplicity, but the lines 12, 14 may vary in curvature according to the precise nature of the reversing manoeuvre. The region between the two lines 12, 14 is known as the vehicle sweep zone 16. The vehicle sweep zone 16 represents the path that the refuse vehicle 30 will take during the reversing manoeuvre.

A banksman zone 200 is defined relative to the refuse vehicle 30. The banksman zone 200 is the optimal position for the banksman 90 to stand in in order to safely guide the refuse vehicle 30. The banksman zone 200 is broadly defined by the region curbside of the line 12 and rearwards of a line 18 extending along the rear 34 of the refuse vehicle 30.

The banksman zone 200 is further refined by a dashed line 84 extending from the position of the receiver 60 at an angle ϑ to the line 18, where ϑ is equal to 30°, and a dashed line 82 extending from the position of the receiver 60 and substantially parallel to the line 12. The strength of the signal, (explained in more detail below), further limits the banksman zone 200 by a dashed line 86 which approximates an arc.

Before commencing the reversing manoeuvre, the banksman 90 should be stood within the banksman zone 200 such that the banksman 90 is visible to the driver 20 via the wing mirror 35. The banksman 90 should have a good view of the refuse vehicle rear 34 and curbside 36, as well as the vehicle sweep zone 16.

### SCU

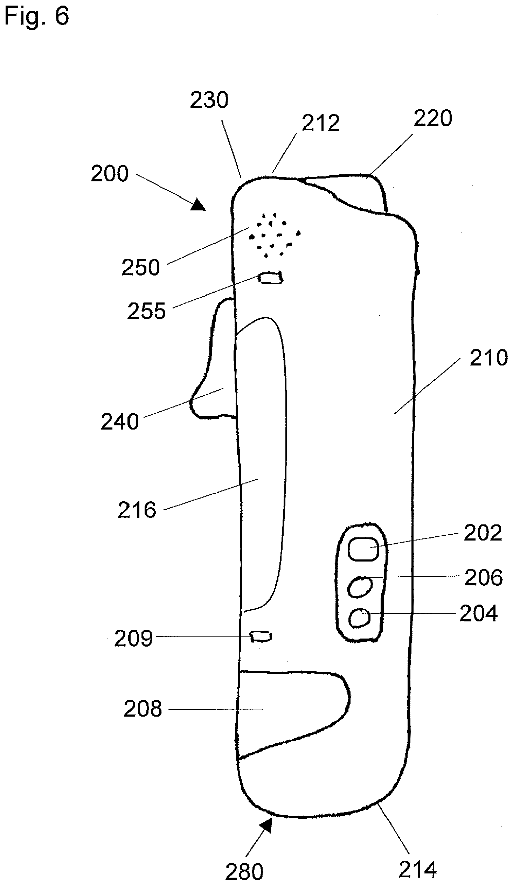

The SCU 70 is provided in a box including an electronic circuit, a power supply and the docking unit 80. The docking unit 80 has a plug protrusion defined within a recess for receiving the hand-held device 100. Alternatively the docking unit 80 has an induction charging arrangement for inductively charging the hand-held device 100, (see Figure 6).

The SCU 70 is electrically connected to the vehicle reverse gear lighting circuit. Thus the SCU 70 may determine when a reverse gear is selected. Alternatively, the receiver 60 is electrically connected to the vehicle reverse gear lighting circuit. Thus the receiver 60 may determine when a reverse gear is selected. The SCU 70 may also be electrically connected to the gearbox output. Thus the SCU 70 may determine when a reverse gear is selected. This may be relayed to the receiver 60. The SCU 70 may be electronically connected to the vehicle CAN bus.

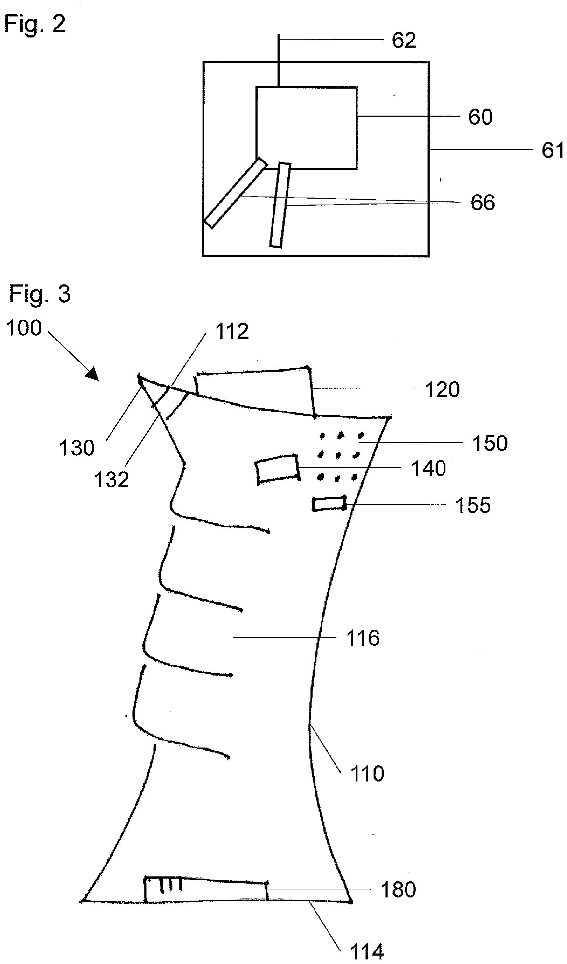

Referring to Figure 2, the receiver 60 is provided in a box 61 which is adapted to be mounted to the refuse vehicle 30. The receiver 60 includes guide vanes 66 which limit the directions in which the receiver 60 may receive radio signals. The guide vanes 66 create a virtual edge aligning with the dashed lines 84, 86 defining the ideal banksman zone 200.

The receiver 60 is electrically connected via connector 62 to the SCU 70 so that signals received by the receiver 60 may be relayed from the receiver 60 to the SCU 70. Connector 62 may run along the wiring ducts already provided on the refuse vehicle 30 for braking lights etc.

Referring to Figure 3, the hand-held device 100 is an approximately cylindrical body 110 having a top end 112 and a bottom end 114. Finger grips 116 are provided on the cylindrical body 110 between the top end 112 and the bottom end 114 to make the hand-held device 100 comfortable and easy to hold in one hand. A signal button 120 is provided at the top end 112. Also provided at the top end 112 is an antenna 130 and an antenna light 132. Depression of the signal button 120 activates the antenna 130 to send a signal and simultaneously illuminates the antenna light 132. The hand-held device 100 further includes a communications button 140 a speaker 150 and a microphone 155, all adjacent the top end 112. The communications button 140 is positioned within easy reach of the index finger, when the hand-held device 100 is held in one hand. Provided on the bottom end 114 is a socket 180 for receiving the plug protrusion of the docking unit 80.

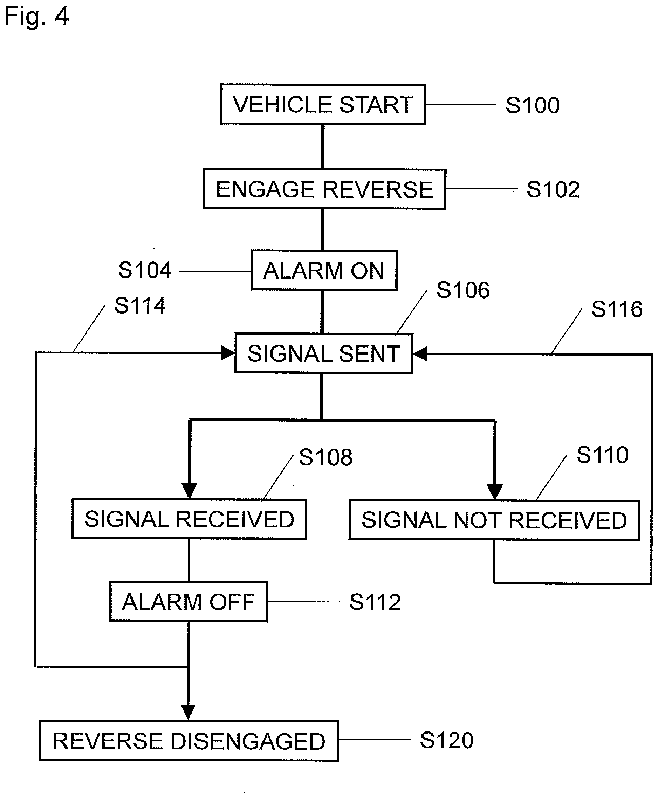

Operation of the vehicle reversing safety system 10 will now be described with reference to the operation steps shown in Figure 4.

When the driver 20 and banksman 90 determine a reversing manoeuvre is necessary, the driver 20 stops the refuse vehicle 30 so that the banksman 90 may exit safely. The banksman 90 removes the hand-held device 100 from the docking unit 80 of the SCU 70, then proceeds to an appropriate position within the banksman zone 200.

The driver 20, using the wing mirror 35 monitors the movement of the banksman 90, and when satisfied that the banksman 90 is in the correct position, starts the refuse vehicle S100.

When the driver 20 selects the reverse gear S102 the audible and visible alarm is activated automatically S104 such that the red LED light 72 flashes on and off repeatedly and the speaker 74 emits a continuous high pitched tone. In an alternate embodiment the speaker 74 emits a spoken warning.

To disable the alarm, the banksman 90 depresses the signal button 120 on the hand-held device 100 such that a radio signal at 868 MHz is emitted from the antenna 130 of the hand-held device 100. The antenna light 132 illuminates to let the banksman 90 know that the signal button 120 has been depressed appropriately, and remains depressed.

If the banksman 90 is appropriately positioned within the banksman zone 200, that is, within the region bounded by the dashed lines 82, 84, 86, the radio signal emitted by the hand-held device 100 will be received S108 by the receiver 60. The receiver 60 relays this received signal to the SCU 70 via connector 62.

On receipt of this signal at the SCU 70, the alarm is disabled S112. The driver is thus able to safely commence the reversing manoeuvre.

If the banksman 90 is inappropriately positioned within the banksman zone 200 but still attempts to depresses the signal button 120, for example, the banksman 90 stands on the roadside 38 of the refuse vehicle, the radio signal emitted by the hand-held device 100 will not be received S110 by the receiver 60, and the alarm remains active.

Furthermore, if the banksman 90 determines that it is not safe for the refuse vehicle 30 to reverse, by not depressing the signal button 120, no radio signal is emitted from the antenna 130, such that no signal will be received S110 by the receiver 60, and the alarm remains active.

The vehicle reversing safety system 10 operates on a constant loop whilst the reverse gear is engaged. Thus the signal button 120 must be continually depressed by the banksman 90 whilst standing within the banksman zone 200 to disable the alarm 112.

According to the invention, the vehicle reversing safety system 10 operates with a timeout switch. The timeout switch may be limited to 90 seconds. The signal button 120 must be depressed once the alarm is activated, in order to disable the alarm.

Following 90 seconds from disabling the alarm, the alarm is automatically reactivated, and the signal button 120 must be released and re-depressed in order to disable the alarm. This arrangement prevents artificial override of the signal button 120. In order that the banksman knows the timeout has expired, and that the signal button 120 requires releasing and re-depressing, the antenna light 132 may flash.

Communication between the banksman 90 and driver 20 is possible via a two-way radio provided on the hand-held device 100 and the SCU 70. The two-way radio operates at a frequency of 2.4 GHz.

Additionally, or alternatively the operation of the vehicle reversing safety system 10 may be related to vehicle reversing speed. The refuse vehicle 30 may be limited to reverse at 1 kmph or a similarly limited speed. To disable the reverse speed limitation, the banksman 90 must be appropriately positioned within the banksman zone 200, such that the radio signal emitted by the hand-held device 100 will be received by the receiver 60. The receiver relays this signal to the SCU 70 via connector 62. On receipt of this signal at the SCU 70, the reverse speed limitation is disabled to allow the reversing manoeuvre to take place at a normal speed. This normal speed may be set at a predetermined level by the operator, for example between 5 and 10 kmph.

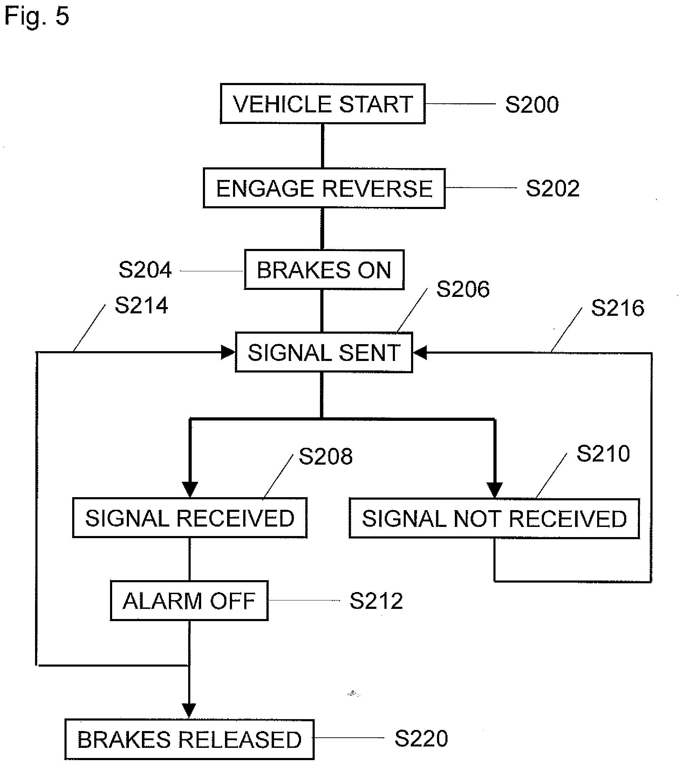

Operation of a further embodiment of the vehicle reversing safety system 10 will now be described with reference to the operation steps shown in Figure 5.

When the driver 20 and banksman 90 determine a reversing manoeuvre is necessary, the driver 20 stops the refuse vehicle 30 so that the banksman 90 may exit safely. The banksman 90 removes the hand-held device 100 from the docking unit 80 of the SCU 70, then proceeds to an appropriate position within the banksman zone 200.

The driver 20, using the wing mirror 35 monitors the movement of the banksman 90, and when satisfied that the banksman 90 is in the correct position, starts the refuse vehicle S200.

When the driver 20 selects the reverse gear S202 the vehicle brakes are engaged automatically S204 such that it is not possible for the driver 20 to perform a reversing manoeuvre. The audible and visible alarm may also be activated automatically, such that the red LED light 72 flashes on and off repeatedly and the speaker 74 emits a continuous high pitched tone.

To disable the brakes, the banksman 90 depresses the signal button 120 on the hand-held device 100 such that a radio signal at 868 MHz is emitted from the antenna 130 of the hand-held device 100. The antenna light 132 illuminates to let the banksman 90 know that the signal button 120 has been depressed appropriately, and remains depressed.

If the banksman 90 is appropriately positioned within the banksman zone 200, that is, within the region bounded by the dashed lines 82, 84, 86, the radio signal emitted by the hand-held device 100 will be received S208 by the receiver 60. The receiver 60 relays this received signal to the SCU 70 via connector 62.

On receipt of this signal at the SCU 70, the brakes are released S220. The driver is thus able to safely commence the reversing manoeuvre.

If the banksman 90 is inappropriately positioned within the banksman zone 200 but still attempts to depresses the signal button 120, for example, the banksman 90 stands on the roadside 38 of the refuse vehicle, the radio signal emitted by the hand-held device 100 will not be received S210 by the receiver 60, and the brakes remain engaged.

Furthermore, if the banksman 90 determines that it is not safe for the refuse vehicle 30 to reverse, by not depressing the signal button 120, no radio signal is emitted from the antenna 130, such that no signal will be received S210 by the receiver 60, and the brakes remain engaged.

The vehicle reversing safety system 10 operates on a constant loop whilst the reverse gear is engaged. Thus the signal button 120 must be continually depressed by the banksman 90 whilst standing within the banksman zone 200 to maintain the brakes disengaged.

When multiple vehicle reversing safety systems 10 are used within a locality, the antenna 130 of the hand-held device 100 channel hops to ensure each system operates on a different frequency. Furthermore, the hand-held device 100 and receiver 60 operate a recognition sequence to ensuring correct pairing.

In a further embodiment, the hand-held device 100 includes a brake override switch, which the banksman 90 may operate from within the cab when the hand-held device 100 is docked with the SCU. This may be used to perform an emergency stop should the driver 20 becomes incapacitated. Alternatively or additionally the override switch may be used to disable one or more of a refuse vehicle bin lift and a refuse vehicle packer plate when the banksmen is in the banksmen zone.

In an alternate embodiment, the driver 20 is inhibited from selecting the reverse gear. This inhibit is disabled by the banksman 90 depressing the signal button 120 on the hand-held device 100 such that a radio signal at 868 MHz is emitted from the antenna 130 of the hand-held device 100. With the banksman 90 appropriately positioned within the banksman zone 200, the reverse gear selection inhibit is disabled, to allow a reversing manoeuvre.

Referring to Figure 6, an alternate hand-held device 200 is shown. The hand-held device 200 is largely similar to the hand-held device 100 described above. Similar features have been given the same reference numbers, prefixed with a "2" rather than a "1" to denote those features belonging to hand-held device 200. Only the substantial differences shall be described in detail.

No antenna light is provided at the top end 212 of the hand-held device 200. Instead, a power/light button is provided on one side of the hand-held device 200. Volume control for the speaker 250 is provided adjacent the power/light button 202 with separate volume down 204 and volume up 206 buttons.

No socket is provided at the bottom end 214. Instead, an inductively charged power source 280 is provided within the body 210. Adjacent the bottom end 214 there is provided a light 208. The light 208 is provided below the finger grips 216 to ensure that the light 208 is not obscured when the hand-held device 200 is held by the banksman. The light 208 may be activated by pressing the power/light button 202. The light 208 may have two modes, a "glow" mode, which enables the hand-held device 200 (and thus the banksman) to be easily seen by the driver of the refuse vehicle 30, in low light conditions, and a "torch" mode, which enables the hand-held device 200, (and thus the banksmen) to be easily seen by the driver of the refuse vehicle 30 in foggy conditions. An ambient light sensor 209 may be used to automatically illuminate the light 209.

The receiver 60, SCU 70 and/or hand-held device 100, 200, may be configured to record instances of vehicle reversing manoeuvres. This may be through the provision of a micro-chip and complimentary circuitry on one or more of the receiver 60, SCU 70 and hand-held device 100, 200. This allows the recordal data relating to the use of the reversing safety system. For example the number of reversing manoeuvres attempted, the length of each reversing manoeuvre, the instantaneous and average reversing speeds during those manoeuvres and the alarm state during those reversing manoeuvres.

The data may be transmitted to a fleet operator via a SIM card connected using GPRS/ 3G/4G provided in one of the receiver 60, SCU 70 and/or hand-held device 100, 200 or alternatively through wireless transmission when the refuse vehicle is returned to the fleet depot.

Such data may be used for route optimisation and to ensure correct application of the reversing safety system.

## Claims

1. A reversing safety system for a vehicle, the reversing safety system comprising:
a receiver arranged to be fitted to a vehicle;
a safety control unit arranged to be fitted to a vehicle; and
a portable unit including a transmitter, the transmitter adapted to transmit a transmitted signal;
wherein the receiver is configured to sense when the portable unit is in a target area relative to the receiver,
wherein the receiver senses when the portable unit is in a target area by receiving the transmitted signal as a received signal,
wherein the receiver includes a restrictor guide, so that the transmitted signal from the portable unit is not received unless the portable unit is in the target area,
wherein the receiver is configured to relay the received signal by connection means to the safety control unit, the received signal is relayed to the safety control unit as a relayed signal,
wherein the safety control unit is arranged to operate on receipt of the relayed signal,
wherein the safety control unit is arranged to operate by at least one of: disabling an alarm system, disabling an inhibit of selection of the reverse gear, disengaging a vehicle brake, disabling a vehicle reverse speed limiter, and
wherein the transmitter has a switch which must be continuously operated for a continuous signal to be transmitted, and the safety control unit is arranged to cease operation as soon as a signal is not received at the sensor,
wherein the transmitter has a switch which includes a timeout.

2. A reversing safety system according to claim 1, wherein the alarm system is an audible or visible alarm, preferably wherein the alarm system is provided in a cab of a vehicle.

3. A reversing safety system according to claim 1 or claim 2, wherein the transmitter is a radio transmitter, preferably wherein the radio transmitter operates in a frequency band.

4. A reversing safety system according to claim 3, wherein the radio transmitter operates in multiple frequency bands.

5. A reversing safety system according to any of claims 1 to 4, the reversing safety system further comprising:
communication means, wherein the communication means are provided on the portable unit and safety control unit, preferably wherein the communication means is a two way radio.

6. A reversing safety system according to any of claims 1 to 5, wherein the connection means is electrical wiring.

7. A reversing safety system according to any preceding claim, wherein the portable unit includes a brake override, and/or a refuse vehicle bin lift override and/or a packer plate override.

8. A reversing safety system according to any of claims 1 to 7, wherein the safety control unit has a docking station for the portable unit, the docking station charging the portable unit when docked in the docking station.

9. A reversing safety system according to any preceding claim, wherein portable unit is a hand held device.

10. A method of safely reversing a vehicle comprising the steps of:
providing a vehicle with driver, a banksman and a reversing safety system, the reversing safety system comprising: a receiver and a portable unit including a transmitter, the transmitter adapted to transmit a transmitted signal; wherein the receiver is arranged to be fitted to a vehicle, and wherein the receiver is configured to sense when the portable unit is in a target area relative to the receiver,
before commencing the reversing manoeuvre, the banksman exits the vehicle with the portable unit,
the banksman uses the portable unit to transmit the transmitted signal;
wherein the receiver is configured to receive the transmitted signal as a received signal when portable unit is in the target area and wherein the receiver is configured not to receive the transmitted signal as a received signal when the portable unit is not in the target area,
wherein the reversing safety system further comprises a safety control unit, wherein the safety control unit is arranged to be fitted to a vehicle, wherein the receiver is configured to relay the received signal by connection means to the safety control unit, the received signal is relayed to the safety control unit as a relayed signal,
wherein before commencing the reversing manoeuvre, the driver attempts to select the reverse gear, and upon attempted selection or selection of the reverse gear, the safety control unit automatically enters an alarm state; and wherein receipt of the relayed signal takes the safety control unit out of the alarm state to indicate to the driver that a reversing manoeuvre may be safely undertaken,
wherein the transmitter has a switch which must be continuously operated by the banksman for a continuous signal to be transmitted, and the safety control unit is arranged to re-enter the alarm state as soon as a signal is not received at the receiver,
wherein the transmitted switch has a timeout.

11. A method of safely reversing a vehicle according to claim 10, wherein the safety control unit identifies selection of the reverse gear by interrogating the reverse lighting circuit.

12. A method of safely reversing a vehicle according to claim 10 or claim 11, wherein the safety control unit identifies attempted selection or selection of the reverse gear by interrogation of the gearbox output signal.

13. A method of safely reversing a vehicle according to any of claims 10 to 12, wherein the alarm state is an audible or visible alarm, preferably wherein the audible or visible alarm is provided in the vehicle cab.

14. A method of safely reversing a vehicle according to any of claims 10 to 13, wherein the alarm state is a vehicle brake.

15. A method of safely reversing a vehicle according to any of claims 10 to 14 wherein the alarm state is a vehicle reverse speed limiter.

## Patentansprüche

1. Reversiersicherheitssystem für ein Fahrzeug, wobei das Reversiersicherheitssystem umfasst:
einen Empfänger zum Einbau in ein Fahrzeug;
eine Sicherheitssteuereinheit zum Einbau in ein Fahrzeug; und
eine tragbare Einheit mit einem Sender, wobei der Sender zum Senden eines Sendesignals ausgebildet ist;
wobei der Empfänger derart konfiguriert ist, dass dieser erfasst, wenn sich die tragbare Einheit in einem Zielbereich relativ zu dem Empfänger befindet,
wobei der Empfänger erfasst, wenn sich die tragbare Einheit in dem Zielbereich befindet, indem er das Sendesignal als Empfangssignal empfängt,
wobei der Empfänger eine Drosselführung umfasst, so dass das Sendesignal von der tragbaren Einheit nicht empfangen wird, ehe sich die tragbare Einheit in dem Zielbereich befindet,
wobei der Empfänger ausgebildet ist zum Weiterleiten des empfangenen Signals durch eine Verbindungseinrichtung an die Sicherheitssteuereinheit, wobei das empfangene Signal als Weiterleitungssignal an die Sicherheitssteuereinheit weitergeleitet wird,
wobei die Sicherheitssteuereinheit ausgebildet ist für einen Betrieb bei Empfang des weitergeleiteten Signals,
wobei die Sicherheitssteuereinheit ausgebildet ist für einen Betrieb durch zumindest eines der folgenden Ereignisse: die Deaktivierung eines Alarmsystems,
die Deaktivierung einer Auswahlsperrung des Rückwärtsgangs, die Deaktivierung einer Fahrzeugbremse, die Deaktivierung eines Begrenzers der Rückwärtsgeschwindigkeit des Fahrzeugs und wobei
der Sender einen Schalter hat, der kontinuierlich betätigt werden muss, damit ein kontinuierliches Signal gesendet wird, und wobei die Sicherheitssteuereinrichtung ausgebildet ist zum Beenden des Betriebs, sobald ein Signal an dem Sensor nicht empfangen wird,
wobei der Sender einen Schalter aufweist, der über eine Zeitbegrenzung verfügt.

2. Reversiersicherheitssystem nach Anspruch 1, wobei das Alarmsystem ein akustischer Alarm oder ein sichtbarer Alarm ist, wobei das Alarmsystem bevorzugt in einer Fahrzeugkabine vorgesehen ist.

3. Reversiersicherheitssystem nach Anspruch 1 oder Anspruch 2, wobei der Sender ein Funksender ist, wobei der Funksender bevorzugt in einem Frequenzband betrieben wird.

4. Reversiersicherheitssystem nach Anspruch 3, wobei der Funksender in mehreren Frequenzbändern betrieben wird.

5. Reversiersicherheitssystem nach einem der Ansprüche 1 bis 4, wobei das Reversiersicherheitssystem ferner umfasst:
eine Kommunikationseinrichtung, wobei die Kommunikationseinrichtung an der tragbaren Einheit und an der Sicherheitssteuereinheit vorgesehen ist, wobei die Kommunikationseinrichtung bevorzugt ein Zweiwege-Funkgerät ist.

6. Reversiersicherheitssystem nach einem der Ansprüche 1 bis 5, wobei die Verbindungseinrichtung eine elektrische Verdrahtung ist.

7. Reversiersicherheitssystem nach einem der vorhergehenden Ansprüche, wobei die tragbare Einheit eine Notbremsüberbrückung und/oder eine Müllfahrzeug-Containerheberüberbrückung und/oder eine Packerplattenüberbrückung umfasst.

8. Reversiersicherheitssystem nach einem der Ansprüche 1 bis 7, wobei die Sicherheitssteuereinheit eine Andockstation für die tragbare Einheit umfasst, wobei die Andockstation die tragbare Einheit lädt, wenn diese an der Andockstation angedockt ist.

9. Reversiersicherheitssystem nach einem der vorhergehenden Ansprüche, wobei die tragbare Einheit ein Handgerät ist.

10. Verfahren zum sicheren Reversieren eines Fahrzeugs, das die folgenden Schritte umfasst:
das Bereitstellen eines Fahrers, eines Einweisers und eines Reversiersicherheitssystems für ein Fahrzeug, wobei das Reversiersicherheitssystem umfasst: einen Empfänger und eine tragbare Einheit mit einem Sender, wobei der Sender ausgebildet ist zum Senden eines Sendesignals; wobei der Empfänger ausgebildet ist für den Einbau in ein Fahrzeug und wobei der Empfänger derart konfiguriert ist, dass dieser erfasst,
wenn sich die tragbare Einheit in einem Zielbereich relativ zu dem Empfänger befindet,
dass der Einweiser vor Beginn des Reversiermanövers das Fahrzeug mit der tragbaren Einheit verlässt,
dass der Einweiser die tragbare Einheit zum Senden des Sendesignals benutzt;
wobei der Empfänger konfiguriert ist für den Empfang des Sendesignals als Empfangssignal, wenn sich die tragbare Einheit in dem Zielbereich befindet, und
wobei der Empfänger derart konfiguriert ist, dass dieser das Sendesignal als Empfangssignal nicht empfängt, wenn sich die tragbare Einheit nicht in dem Zielbereich befindet,
wobei das Reversiersicherheitssystem ferner eine Sicherheitssteuereinheit umfasst, wobei die Sicherheitssteuereinheit für den Einbau in ein Fahrzeug ausgebildet ist, wobei der Empfänger konfiguriert ist für die Weiterleitung des empfangenen Signals durch eine Verbindungseinrichtung an die Sicherheitssteuereinheit, wobei das empfangene Signal als Weiterleitungssignal an die Sicherheitssteuereinheit weitergeleitet wird,
wobei der Fahrer vor Beginn des Reversiermanövers versucht, den Rückwärtsgang zu wählen und die Sicherheitssteuereinheit bei versuchter Wahl oder bei Wahl des Rückwärtsgangs automatisch in einen Alarmzustand schaltet;
und wobei der Empfang des weitergeleiteten Signals die Sicherheitssteuereinheit außer Alarm setzt, um dem Fahrer mitzuteilen, dass ein Reversiermanöver sicher unternommen werden kann,
wobei der Sender einen Schalter hat, den der Einweiser zum Senden eines kontinuierlichen Signals kontinuierlich betätigen muss, und wobei die Sicherheitssteuereinheit derart ausgebildet ist, dass sie zurück in den Alarmzustand schaltet, sobald ein Signal an dem Empfänger nicht empfangen wird,
wobei der Schalter des Senders über eine Zeitbegrenzung verfügt.

11. Verfahren zum sicheren Reversieren eines Fahrzeugs gemäß Anspruch 10, wobei die Sicherheitssteuereinheit die Wahl des Rückwärtsgangs erkennt, indem sie die Rückfahrscheinwerferschaltung abfragt.

12. Verfahren zum sicheren Reversieren eines Fahrzeugs gemäß Anspruch 10 oder Anspruch 11, wobei die Sicherheitssteuereinheit die versuchte Wahl oder die Wahl des Rückwärtsgangs durch die Abfrage des Getriebeausgangssignals erkennt.

13. Verfahren zum sicheren Reversieren eines Fahrzeugs gemäß einem der Ansprüche 10 bis 12, wobei der Alarmzustand ein akustischer Alarm oder ein sichtbarer Alarm ist, wobei der akustische Alarm oder der sichtbare Alarm bevorzugt in der Fahrzeugkabine vorgesehen ist.

14. Verfahren zum sicheren Reversieren eines Fahrzeugs gemäß einem der Ansprüche 10 bis 13, wobei der Alarmzustand eine Fahrzeugbremse ist.

15. Verfahren zum sicheren Reversieren eines Fahrzeugs gemäß einem der Ansprüche 10 bis 14, wobei der Alarmzustand ein Begrenzer der Rückwärtsgeschwindigkeit des Fahrzeugs ist.

## Revendications

1. Système de sécurité de recul destiné à un véhicule comprenant :
un récepteur réalisé pour être monté dans un véhicule,
une unité de commande de sécurité réalisée pour être monté dans un véhicule, et
une unité portative comprenant un émetteur, cet émetteur étant susceptible de transmettre un signal émis,
le récepteur étant réalisé pour détecter lorsque l'unité portative est dans une zone cible par rapport à celui-ci,
le récepteur détectant lorsque l'unité portative est dans une zone cible en recevant le signal transmis sous la forme d'un signal reçu,
le récepteur comprenant un guide limiteur de sorte que le signal transmis provenant de l'unité portative ne soit pas reçu sauf si l'unité portative est dans la zone cible,
le récepteur étant réalisé pour retransmettre le signal reçu par des moyens de connexion à l'unité de commande de sécurité, le signal reçu étant retransmis à l'unité de commande de sécurité sous la forme d'un signal retransmis,
l'unité de commande de sécurité étant réalisée pour fonctionner à la réception du signal retransmis,
l'unité de commande de sécurité étant réalisée pour fonctionner :
en désactivant un système d'alarme, et/ou en désactivant l'inhibition de la sélection de la marche arrière, en désembrayant un frein du véhicule, et/ou en désactivant un limiteur de vitesse de recul et/ou du véhicule, et
l'émetteur ayant un commutateur qui doit être actionné en continu pour permettre la transmission d'un signal continu et l'unité de commande de sécurité étant réalisée pour permettre d'arrêter le fonctionnement dès qu'un signal n'est pas reçu au niveau du détecteur,
l'émetteur comprenant un commutateur comprenant un temps mort.

2. Système de sécurité de recul conforme à la revendication 1,
dans lequel le système d'alarme est une alarme audible ou visible, et de préférence le système d'alarme est monté dans la cabine d'un véhicule.

3. Système de sécurité de recul conforme à la revendication 1 ou 2,
dans lequel l'émetteur est un émetteur radio et de préférence l'émetteur radio fonctionne dans une bande de fréquence.

4. Système de sécurité de recul conforme à la revendication 3,
dans lequel l'émetteur radio fonctionne dans des bandes de fréquence multiples.

5. Système de sécurité de recul conforme à l'une quelconque des revendications 1 à 4,
comprenant en outre :
des moyens de communication, les moyens de communication étant installés sur l'unité portative et l'unité de commande de sécurité, les moyens de communication étant de préférence une radio bidirectionnelle.

6. Système de sécurité de recul conforme à l'une quelconque des revendications 1 à 5,
dans laquelle les moyens de connexion sont un câblage électrique.

7. Système de sécurité de recul conforme à l'une des revendications précédentes,
dans lequel l'unité portative renferme une neutralisation des freins, et/ou une neutralisation du levage d'une benne à ordure d'un véhicule et/ou une neutralisation d'une plaque de garniture.

8. Système de sécurité de recul conforme à l'une quelconque des revendications 1 à 7,
dans lequel l'unité de commande de sécurité a un poste de réception pour l'unité portative, ce poste de réception chargeant l'unité portative lorsqu'elle est logé dans celui-ci.

9. Système de sécurité de recul conforme à l'une quelconque des revendications précédentes,
dans lequel l'unité portative est un dispositif portable à la main.

10. Procédé de recul d'un véhicule en sécurité comprenant des étapes consistant à :
équiper un véhicule d'un conducteur, d'un aide opérateur et un système de sécurité de recul, le système de sécurité de recul comprenant un récepteur et une unité portative comprenant un émetteur, l'émetteur étant susceptible de transmettre un signal émis, le récepteur étant réalisé pour être monté dans un véhicule et le récepteur étant conformé pour détecter lorsque l'unité portative est dans une zone cible par rapport au récepteur,
avant le début de la manoeuvre de recul, l'aide opérateur sort du véhicule avec l'unité portative,
l'aide opérateur utilise l'unité portative pour transmettre le signal émis,
le récepteur est réalisé pour recevoir le signal transmis en tant que signal reçu lorsque l'unité portative est dans la zone cible et le récepteur est réalisé pour ne pas recevoir le signal transmis en tant que signal reçu lorsque l'unité portative n'est pas dans la zone cible,
le système de sécurité de recul comprenant en outre une unité de commande de sécurité, l'unité de commande de sécurité étant réalisée pour être montée dans un véhicule, le récepteur étant réalisé pour retransmettre le signal reçu par des moyens de connexion à l'unité de commande de sécurité, le signal reçu étant retransmis à l'unité de commande de sécurité en tant que signal retransmis,
avant le début de la manoeuvre de recul, le conducteur tente de sélectionner la marche arrière, et, lors de la tentative de sélection ou de la sélection de la marche arrière, l'unité de commande de sécurité entre automatiquement dans un état d'alarme, et la réception du signal retransmis fait sortir l'unité de commande de sécurité de l'état d'alarme pour indiquer au conducteur qu'une manoeuvre de recul peut être effectuée en sécurité,
l'émetteur ayant un commutateur devant être actionné de façon continue par l'aide opérateur pour permettre l'émission d'un signal continu, et
l'unité de commande de sécurité étant réalisée pour entrer à nouveau l'état d'alarme dès qu'un signal n'est pas reçu au niveau du récepteur, le commutateur ayant un temps mort.

11. Procédé de recul d'un véhicule en sécurité conforme à la revendication 10,
selon lequel l'unité de commande de sécurité identifie la sélection de la marche arrière en interrogeant le circuit d'éclairage de recul.

12. Procédé de recul d'un véhicule en sécurité conforme à la revendication 10 ou 11,
selon lequel l'unité de commande de sécurité identifie une tentative de sélection ou une sélection de la marche arrière en utilisant le signal de sortie de la boîte de vitesses.

13. Procédé de recul d'un véhicule en sécurité conforme à l'une quelconque des revendications 10 à 12,
selon lequel l'état d'alarme est une alarme audible ou visible, et de préférence l'alarme audible ou visible est située dans la cabine du véhicule.

14. Procédé de recul d'un véhicule en sécurité conforme à l'une quelconque des revendications 10 à 13,
selon lequel l'état d'alarme est un freinage du véhicule.

15. Procédé de recul d'un véhicule en sécurité conforme à l'une quelconque des revendications 10 à 14,
selon lequel l'état d'alarme est une limitation de la vitesse de recul du véhicule.
